# EUROPEAN PATENT APPLICATION

(11) **EP 3 026 077 A1**
(43) Date of publication of application: **01.06.2016**
(21) Application number: 14194821.6
(22) Date of filing: 25.11.2014
(51) Int. Cl.: C08J 7/04, B05D 7/04

(54) **PVC Panel Extrusion and In-line Coating**

(71) Applicant: Rolvaplast, 9800 Deinze (BE)
(72) Inventor: Lootens, Bernard, 9800 Deinze (BE)
(74) Representative: BiiP cvba

(57) **Abstract**

The present invention relates to a method of manufacturing a coated PVC panel for use in indoor as well as outdoor conditions, said method comprising the steps of: a) PCV panel extrusion; b) direct coating of said PCV panel with a water-borne emulsion paint without an intermediate primer layer; c) in-line drying of said water-borne emulsion paint into a cured coating.

## Description

### TECHNICAL FIELD

The present invention relates to a method of manufacturing a coated PVC panel for use in indoor as well as outdoor conditions, said method comprising the steps of: a) PCV panel extrusion; b) direct coating of said PCV panel with a water-borne emulsion paint without an intermediate primer layer; c) in-line drying of said water-borne emulsion paint into a cured coating.

### BACKGROUND OF THE INVENTION

Polyvinyl chloride (PVC) and unplasticized polyvinyl chloride (uPVC) are plastic polymers widely used in construction industry. PVC panelling or cladding is a popular wall finish for interiors or exteriors appreciated for its relative durability and low-price as compared to traditional building materials such as wood, clay, or concrete. PCV panels are lightweight, usually hollow-cored, and often provided with tongue-and-groove edges for easy assembly.

Despite all these advantages, many consumers still hesitate to apply PVC panels because of their plastic look and unnatural feel. In addition, PVC is known to be extremely difficult to paint. This is believed to be caused by its very low surface energy (41 mN/m at 20°C) - lower than surface energy of water (72 mN/m), which results in very poor adherence of water-based coatings to PVC surfaces and all problems associated therewith, such as uneven distribution of the pain over said surfaces. It is widely recognized that waterborne emulsion (latex) paints cannot simply be used for painting PVC without laborious surface preparation including e.g. fine-grain sanding and/or application of a preparatory undercoat or primer.

The above constitutes a serious impediment to development of continuous PVC production and coating processes, wherein there often is no time for including steps that require prolonged waiting periods that would slow down or interfere with the production progress on continuously operating lines. For example, due to the time required for drying a primer layer before the paint layer can be applied on a flat PVC panel surface, and then as well the time required for drying said paint layer, it is quite costly and very challenging to design a fast-tack continuous production line comprising both the extrusion of PVC panels and their immediate in-line coating; especially when the ecologically-preferred aqueous paints are concerned. An aqueous paint layer not only would have to evenly spread over the PVC surface and adhere to it, but importantly it would also have to dry, or cure, sufficiently quickly to provide for transporting and/or stacking of the coated PVC panels exiting the production line, in order to save space and minimize the personnel required for operating such line. Aside from impeding automation of PVC coating processes, the requirement of using an additional primer undercoat further increases the final unit cost for the finished coated product. Therefore, the optimal solution would be to find a paint capable of coating large flat PVC surfaces without use of a primer, however it is well-known in the PVC production industry that a freshly extruded PVC is even more challenging to coat than a matured PVC, likely due to the presence of various lubricants and waxes that are used during the extrusion process.

Because of the above, only cost-ineffective approaches, using either the less-preferred organic-solvent-based paint formulations or production lines including additional non-standard processing units, are currently used in the art for in-line coating of flat PVC surfaces, directly following their extrusion. For example, WO2006036409 describes few paint compositions and several procedures for coating extruded PVC or polyolefin substrates, wherein the substrates are either initially covered by an epoxy primer or directly coated with PVDF-based paint solutions prepared in organic solvents including methyl ethyl ketone or acetone with n-methylpyrrolidone. Another method of immediate coating of an extruded PVC is disclosed in WO9105660, wherein the coating is first made on a separate foil sheet that is subsequently pressed against the extruded flat PVC surface under elevated temperatures. Further known in the art systems for in-line coating of PVC include e.g. US2010119831 or US2014199538 comprising complex installations wherein PVC extruders are followed by arrangements of devices for the application and UV-treatment of UV-curable coatings. The downside of such installations is that, firstly, they require high-intensity UV-light sources necessary for initiating the UV-curing reactions, which are in general costly and have to be replaced relatively often due to quick losses in intensity; and secondly, the UV-curable coating compositions must comprise compounds such as photoinitiators, which when exposed to UV-energy catalyse the chemical-linking reactions that drive the curing of the coating. Naturally, use of these and other specialised chemicals in the paint compositions further increases the costs of UV-curing-based PVC coating installations.

The present invention is made in view of the above-mentioned facts and stems from an unexpected observation that a simple waterborne paint having density above 1.25 g/cm³ can be suitable for in-line PVC coating of freshly-extruded flat panels, and can be air or IR-dried sufficiently fast to facilitate collection and stacking of the coated panels without affecting the integrity and quality of the thus-applied coat.

### SUMMARY OF THE INVENTION

The present invention is defined in the appended independent claims. Preferred embodiments are defined in the dependent claims. In particular, the present invention provides a method for manufacturing a coated polyvinyl chloride (PVC) panel, said method comprising the steps of:
a) extruding a PVC panel on a PVC panel production line;
b) subsequently, in-line coating of at least one main surface of said PVC panel without any intermediate primer layer with a waterborne emulsion paint;
c) in-line drying of said in-line coated PVC panel to obtain a PVC panel coated on at least one main surface with a cured paint coating.

Furthermore, the present invention also concerns use of a PVC panel production line comprising the following elements:
- PVC extruder;
- coating unit;
- drying unit;
for the manufacture of a waterborne emulsion paint coated PVC panel, wherein said coated PVC panel comprises a PVC panel and a cured paint coating covering at least one main surface of said PVC panel without any intermediate primer layer.

In a yet another aspect, the present invention further provides a coated PVC panel for use in indoor as well as outdoor conditions, said coated PVC panel comprising a PVC panel and a cured paint coating, said PVC panel characterized in that said cured paint coating was applied as a water-borne emulsion paint directly on the PVC panel without any intermediate primer layer.

### BRIEF DESCRIPTION OF THE FIGURES

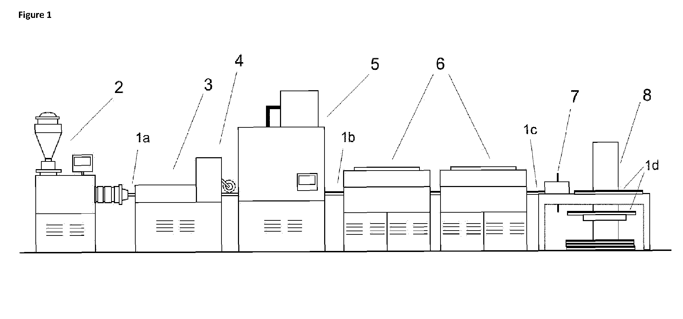

For a fuller understanding of the nature of the present invention, reference is made to the following detailed description taken in conjunction with the accompanying Figure 1, which schematically shows an embodiment of a PVC panel production line suitable for performing the method of the present invention. The reference numbers relate to: 1 - a PVC panel, wherein 1a - uncoated PVC panel, 1b - PVC panel coated with an emulsion paint (before drying), 1c - PVC panel coated with a cured paint (after drying), 1d - PVC panel cut and coated with a cured paint (after drying), ready for stacking; 2 - a PVC panel extruder; 3 - a cooling unit (e.g. cooling calibre); 4 - a degreasing unit; 5 - a coating unit comprising a chamber for paint spraying; 6 - drying units exemplified as IR-heat dryers; 7 - a cutting unit (e.g. a circular saw); and 8 - a stacking unit.

### DEFINITIONS

As used herein the term *"panel"* refers to a rigid construction element for covering or cladding architectural surfaces such as walls, ceiling, floors, and the like. As used herein the term "panel" largely denotes a panel made of polyvinyl chloride (PVC) or unplasticised polyvinyl chloride (uPVC), and is further also referred to as "PVC panel". PVC panels are usually rectangular, flat, hollow-cored and relatively lightweight. A panel comprises two large flat *"main surfaces"* or *"main profiles"* and four narrow *"side profiles",* at least two of which are often manufactured with tongue-in-groove structures allowing easy-installation with recessed fastening by either stapling or nailing to conceal the fastener. In particular, as sometimes used herein the term "PVC panel substrate" refers to an uncoated PVC panel.

As used herein, the term *"PVC panel production line"* or *"PVC (panel) extrusion line"* is to be understood as a set of sequentially positioned units, starting from a PVC extruder unit, said units being configured to perform together a sequence of operations that lead to production of a finished PVC panel, in the present context being a coated PVC panel. The particular units that can be arranged in the PVC panel production line of the invention are generally known in the art. For example, the line will usually comprise at least *a PCV extrusion unit,* which can be a standard plastic extruder comprising a hopper, heated barrel, breaker plate, and the die, ending with a cooling device such as a calibrator or a water bath; followed by a *coating unit* that deposits paint on at least one surface of the extruded and cooled PVC panel progressing along the production line, and at least one *drying unit* that provides conditions for accelerating the drying (or curing) of said paint. As used herein the term *"in-line"* is to be construed as referring to a step or a process carried out at some point along the PVC extrusion line during the production of the coated PVC panel according to the method of the invention. In-line steps or operations, such as in-line coating, in-line drying etc., will usually follow the extrusion of the PVC panel substrate on the same production line, which contrasts with similar steps or operations that can be performed outside of a PVC extrusion line, i.e. on a pre-formed or formed at an earlier point in time, often at a different physical location, previously extruded PVC panel, however without all the advantages of a continuous production process.

As used herein the terms *"preparatory undercoat"* or, simply, *"primer"* refer to an initial or intermediate coating put on a PVC substrate's surface in order to form a binding layer that is better prepared for receiving paint and ensure better adhesion of said paint to the substrate's surface and increase its durability.

As used herein, the term *"emulsion paint"* refers to a paint containing pigment suspension in a polymer emulsion (known as *"latex"* in US). As used herein, the term *"waterborne"* refers to largely aqueous-based medium that may optionally comprise other solvents including, for example, isopropanol. In particular, the term *"waterborne emulsion paint"* refers to a waterborne dispersion of sub-micrometre polymeric binder particles that dry or cure by a process called coalescence, wherein first the water and then the "trace" or the coalescing agent" evaporate, draw together, soften and thus cause fusing of the binder particles together into an irreversibly bound networked film, so that the paint cannot redissolve in the solvent/water that originally carried it.

As used herein, the term "acrylic paint" refers to a paint containing pigment suspension in an acrylic polymer emulsion ("acrylic latex" in US), i.e. an emulsion of polymeric substances derived from acrylic or methacrylic acid, or copolymers of acrylic or methacrylic acid e.g. with styrene. Analogously, the term "waterborne acrylic paint" refers to waterborne dispersion of sub-micrometre acrylic polymer. As used herein, the term "acrylic polymers" or "acrylate polymers" refers to homopolymers or co-polymers with other monomers (e.g. acrylamides, acrylonitrile, vinyl, styrene, and butadiene) comprising acrylate monomers as building blocks .As used herein the terms "acrylate monomers" or "acrylates" refer to esters and salts of acrylic or methacrylic acid.

As used herein the term *"cured paint"* or *"cured paint coating"* is to be construed as referring to a cured paint binder or resin, i.e. the film-forming substance that 'binds' after the solvent has evaporated the dry pigments and other paint components together and onto the substrate's surface. For example, in oil paints linseed oil is the binder, for acrylic paints acrylic polymer or copolymer thereof serves as the binder. Analogously, the term "cured acrylic binder" is to be construed as the coalesced paint film formed by acrylic polymers or co-polymers, together with all components comprised or enclosed within said coalesced film, in particular pigments, extender pigments etc., or even mineral particles such as sand particles (i.e. particles having size comprised between 0.063 and 2 mm according to the classification scale ISO 14688-1) in certain texture paints.

Common examples of acrylates are alkyl esters of acrylic acid such as methyl-, butyl-, ethyl-, and 2-ethylhexyl-acrylate, wherein the term "alkyl" refers to a group consisting of a monovalent radical, such as ethyl or propyl, having the general formula CnH2n+1. In particular, as used herein, the term "lower alkyl" shall be understood as an alkyl comprising fewer than seven carbon atoms.

As used herein, the term "pigment" means any dye or other substance, usually in a powder form, which imparts colour to paint formulation. Pigments can be both of organic or inorganic type and may also serve the role of fillers or extenders for colour pigments. Suitable pigments include alkali-earth carbonates such as chalk, calcium carbonate, magnesium carbonate, dolomite, precipitated and barium carbonate, talcum, alumina hydrates, zinc oxide, magnesium oxide, fluorite, basic lead carbonate, white and coloured pigments based on titanium dioxide, iron oxide red, iron oxide black, manganese black, carbons, barium yellow, strontium chromate, calcium chromate, zinc yellow, zinc green, cadmium yellow, cadmium red, cadmium vermilion, cadmopone, vermillon, ultramarine, lead chromate, chromium yellow, molybdate red, molybdate orange, chromoxide green, chromoxidehydrate green, manganese violet, manganese blue, cobalt blue, cobalt green, cobalt violet, naples yellow, and organic pigments of the azo series. A particular form of pigment is so called "paint extender" or "paint leveller" or "extender pigment", and as used herein it shall denote a substance, usually a pigment, added to paint formulation to increase its volume or bulk or properties like viscosity. Most extenders are white and possess a refractive index similar to commonly used binders (1.4-1.7). In comparison to TiO2 which has a refractive index of around 2.7, they give little opacifying effect. Most occur naturally (they may need purifying), and others are produced synthetically. The most important extender pigments include but are not limited to calcium carbonate (synthetic and natural), silica, aluminium silicate (china clay), magnesium silicate (talc), barium sulphate (natural - barytes; synthetic - blanc fixe).

In addition to extender pigments, emulsion paint formulations may further comprise other types of "thickeners" or "thickening agents" that further modify rheological properties of liquid paint, and e.g. may further improve suspension of pigments, increase paint viscosity or substrate adhesion properties, as well as for example may counteract cracking of the coating during curing process. A particularly advantageous type of emulsion paint thickeners that were observed to perform very well in the method of the present invention include cellulose derivatives. As used herein, the term *"cellulose derivative"* refers to derivatives of cellulose obtained by substantial degradation of the cellulose chain into fragments and partially or fully reacting the cellulose hydroxyl groups (-OH) with various reagents, such as alkyl, hydroxyalkyl, or carboxyalkyl groups, preferably having 1 to 5 carbon atoms. Preferred for present invention cellulose derivatives include but are not limited to methylcellulose, ethylcellulose, ethyl methyl cellulose, hydroxyethyl cellulose (HEK), hydroxypropyl cellulose (HPC), hydroxyethyl methyl cellulose, hydroxypropyl methyl cellulose (HPMC), ethyl hydroxyethyl cellulose, carboxymethylcellulose; cellulose acetate, cellulose acetate propionate, cellulose acetate butyrate, or benzylcellulose.

As used herein, the abbreviations "wt.% " or "% w/w" refer to "percentage by weigh" (or "weight percent") unit relating to a mass fraction of a given component in a total mass of a composition.

Further as used herein, the terms "IR-heating" or "IR-drying" shall understood as used interchangeably and construed as removal of solvent (mainly water) by heat treatment by infrared (IR) thermal radiation, i.e. radiation extending from the nominal red edge of the visible spectrum at 700 nm to 1 mm.

As used herein, the term "spray-coating" refers to a coating in which liquid substances such as paints are sprayed through the air onto a surface of a substrate. The most common types of spray-coating employ compressed gas (usually air) to atomize and direct the paint particles by means of a spray guns or, much smaller airbrushes. Air gun spraying uses larger equipment and is typically used for covering large surfaces with an even coating of liquid. Spray guns can be either automated or hand-held and have interchangeable heads to allow different spray patterns.

### DEATAILED DESCRIPTION OF THE INVENTION

The present concerns a method for manufacturing a coated polyvinyl chloride (PVC) panel, said method comprising the steps of:
a) extruding a PVC panel on a PVC panel production line;
b) subsequently, in-line coating of at least one main surface of said PVC panel without any intermediate primer layer with a waterborne emulsion paint;
c) in-line drying of said in-line coated PVC panel to obtain a PVC panel coated on at least one main surface with a cured paint coating.
The PVC panel is preferably of substantially rectangular shape comprising two main elongated flat surfaces which two longitudinal-side edges have complementary shape allowing multiple such PVC panels to be assembled together.

In a preferred embodiment of the invention, said water-borne emulsion paint has density equal to at least 1.25 g/cm³, preferably at least 1.35 g/cm³, most preferably at least 1.45 g/cm³. In further preferred embodiments, said water-borne emulsion paint has viscosity as determined by Stormer viscometer in Krebs units (KU), comprised between 60 - 110 KU, preferably between 70-100 KU, most preferably between 80 and 90 KU.

In particularly preferred embodiments, the water-borne emulsion is an acrylic water borne emulsion comprising acrylic binder. In a preferred embodiment of latter embodiment, said acrylic binder comprises a polymer of alkyl ester of acrylic or methacrylic acid, or a styrene (or its derivative such as methylstyrene, vinyltoluene, butylstyrene etc.) -copolymer of alkyl ester of acrylic or methacrylic acid. Styrene-acrylic copolymer coated panels are particularly advantageous for humid localisation as styrene enhances moisture-resistance properties as well as enhances binding power and elastic characteristics of the coating. However, styrene-acrylic copolymer-based paint compositions tend to become pale on exposure and thus pure acrylic polymer-based coating is preferred in outdoor conditions exposed to sun due to its better colour retention (less yellowing), resistance to embrittlement and cracking upon long-term exposure. Preferred styrene/acrylic emulsions contain up to 20- 25 wt.%, or even up to 50 wt.% styrene when calculated on total monomer composition, but depending on the application styrene can be present in the resin even up to 70 wt.%.

In a particular embodiment of the previous embodiment, the alkyl group of said alkyl ester comprises between 1 to 15 carbon atoms, preferably comprises between 2 to 7 carbon atoms. Preferably, said alkyl ester is selected from the group consisting of: methyl acrylate or methacrylate, ethyl acrylate or methacrylate, n-propyl acrylate or methacrylate, isopropyl acrylate or methacrylate, n-butyl acrylate or methacrylate, isobutyl acrylate or methacrylate, sec-butyl acrylate or methacrylate, tert-butyl acrylate or methacrylate, acrylate or methacrylate of n-pentyl or isomer thereof, acrylate or methacrylate of n-hexyl or isomer thereof, and/or mixtures of the same.

In particularly preferred embodiments of the present invention, said alkyl ester is preferably selected from a group consisting of: n-butyl acrylate or methacrylate, isobutyl acrylate or methacrylate, sec-butyl acrylate or methacrylate, tert-butyl acrylate or methacrylate, and/or mixtures of the same, and post preferably is selected from a group consisting of n-butyl acrylate, isobutyl acrylate, sec-butyl acrylate, tert-butyl acrylate, and/or mixtures of the same.

In alternative embodiments of the present invention, the acrylic binder is selected from the group consisting of n-butyl acrylate polymer, isobutyl acrylate polymer, sec-butyl acrylate polymer, tert-butyl acrylate polymer, styrene-n-butyl acrylate copolymer, styrene-isobutyl acrylate copolymer, styrene- sec-butyl acrylate copolymer, styrene- tert-butyl acrylate copolymer, and/or mixtures of the same.

The polymers can be prepared using conventional emulsion polymerization techniques. For example, conventional initiators, solvents, emulsifiers, chain transfer agents, etc., are introduced along with the desired monomers into a temperature controlled reactor and agitator. The reaction can be carried out in an oxygen-free environment for sufficient time to convert the monomers to polymer. The molecular weight of the polymer can vary. The use of alkyl acrylic esters in preparing polymers and copolymers by aqueous suspension polymerization are disclosed e.g. in US3691140. Similarly, styrene-acrylate copolymer resins suitable for the use in the present invention may be produced by a variety of polymerization methods know to the art. For example, the resins may also be produced by conventional solution polymerization or emulsion polymerization. The resins of the present invention may also advantageously be produced by a starve-fed emulsion polymerization process, such as that disclosed in US08264205.

In a particularly advantageous embodiment in accordance with any of the previous embodiments, the waterborne emulsion paint further comprises at least one cellulose derivative, which addition helps to adjust the emulsion paint density and/or viscosity to the desired value. Many cellulose derivatives, especially the short-alkyl (C1-C5) non-ionic ones, are water-soluble polymers that can thicken, suspend, bind, emulsify or even co-form films together with the binder as to provide protective colloid action on the paint composition.

In a preferred embodiment, the cellulose derivative is selected from the group comprising hydroxyalkylcellulose; alkylcellulose; carboxymethylcellulose; cellulose acetate, cellulose acetate propionate, cellulose acetate butyrate, benzylcellulose, or any mixture thereof. Preferably, the cellulose derivative is selected from the group consisting of hydroxyalkylcellulose; alkylcellulose; carboxymethylcellulose; cellulose acetate, cellulose acetate propionate, cellulose acetate butyrate, benzylcellulose, or any mixture thereof

In a particularly preferred embodiment, the cellulose derivative is selected from the group comprising hydroxyethyl cellulose (HEK), methylcellulose, ethylcellulose, or any mixture thereof. Preferably, the cellulose derivative is selected from the group consisting of hydroxyethyl cellulose (HEK), methylcellulose, ethylcellulose, or any mixture thereof.

In another preferred embodiment, the waterborne emulsion paint comprises at least one cellulose derivative or a mixture of cellulose derivatives at the amount comprised between 3 and 8 wt.%, preferably between 4 and 6 wt.%.

In alternative embodiments, the waterborne emulsion may further comprise at least one pigment or extender pigment. As defined above, "the term "pigment" refers to at least one colour substance such as, but not limited to, titanium dioxide (TiO₂). Accordingly, the term "extender pigment" refers to a pigment substance added to paint formulation to increase its volume or bulk or properties like viscosity, most prominent examples include synthetic or natural calcium carbonate and silica. In particular embodiments, the cured paint coating on the PVC panel substrate comprises 20-65 wt.%, preferably 35-55 wt.%, most preferably between 40-45 wt.% pigments or extender pigments. In preferred arrangements, said cured paint coating comprises between 25-55 wt.%, preferably between 35-45 wt.% extender pigments comprising calcium carbonate or silica.

In a specific embodiment of the method of the present invention, the waterborne emulsion paint may further comprises e.g. sand-sized mineral particles suitable for creating a texture coat on the coated PVC panel of the invention. Examples of such texture effects include e.g. stucco, and the particles that can be used in such paint formulations include any type of siliciclastic (mostly containing quartz, feldspars or other silica-based heavy minerals) or carbonate-based particles having size comprised between 0.063 and 2 mm, according to the classification scale ISO 14688-1. In preferred embodiments, the waterborne emulsion paint comprises 5-30 wt.%, preferably 10-25 wt.%, more preferably 15-20 wt.%, most preferably about 17 wt.% mineral particles of the mean particle size comprised between 0.02 and 2 mm.

It is advantageous for shortening the overall production time that the curing of the in-line coated at least one main surface of said PVC panel in the method of the invention proceeds sufficiently fast. For this reason the in-line drying in step c) of the method of the invention will advantageously be accelerated by use of air ventilation or heat, preferably combination of both. Therefore, in the preferred embodiment of the method of the invention, the in-line drying in step c) is performed by air-drying, convection oven, or IR-heating. IR heating is particularly suited to the curing and drying of waterborne emulsion coatings, because IR wavelengths correspond well with the absorption bands for water. Additionally, since IR heating does not penetrate the surface very deeply and generally only heats the outer surface, it is applicable for drying coated plastics without the risk of melting or deforming the underlying plastic substrates; of course provided the temperatures do not exceed certain values for extensively prolonged periods

In an advantageous embodiment in accordance with the above embodiment, the in-line drying in step c) is performed by IR-heating at temperatures comprised between 30 and 70 °C, preferably between 38 to 68 °C, advantageously combined with air ventilation or circulation.

Perhaps the greatest advantage of IR heating over convection heating is that IR emitters deliver the energy in exact amounts directly to a specific point. IR radiation is a line-of-sight technology, meaning that it only delivers heat to the surface of an object that is in a direct line of sight from an IR emitter. This property further minimises the possibility of potential heat-deformation of the PVC panel substrate during heat-drying and further saves energy as almost no heat is wasted on the underlying substrate. Lastly, and in line with the above, IR-heating is the preferred method for drying coated flat PVC panels as their flat coated surfaces will absorb the energy evenly ensuring equal drying of the panel along its length during the in-line production process.

IR radiation can be generated using one of three different technologies: electric, gas catalytic, or radiant gas (the latter being mainly used for space heating rather than process heating). Electric and gas-catalytic IR technologies have specific characteristics that make them more or less appropriate depending on the material and the type of process. Gas-catalytic IR systems generally require a greater capital investment than the other two, but they have lower operating costs. Therefore, in advantageous embodiments, the method of the present invention uses a gas catalytic IR-drying system, e.g. a quartz IR heater lamp.

In a further advantageous embodiment of the present invention, the method of the invention according to any of the preceding embodiments further comprises an additional step between the steps a) and b), said step involving degreasing of the at least one main surface of said PVC panel that is subjected to the in-line coating in step b). In order not to delay the coated PVC panel production line, laborious and/or time-consuming PVC surface preparations are not preferred and often cannot be incorporated to the method of the invention. Instead, however it is possible to include a simple step wherein the PVC substrate surface to be coated proceeds on a conveyer belt under a material covered with degreasing agent, such as a sponge, a piece of soft cloth, or a roller covered with any of the latter. Such short degreasing treatment is not absolutely necessary if preferred paint formulations, as given above, are used in the method of the invention; however it can confer some advantageous improvement on said depending on PVC extrusion settings. The degreasing is preferably performed after cooling of the freshly-extruded PVC panel in the cooling unit (e.g. vacuum calibrator) and just before application of the aqueous emulsion paint. Examples of suitable defatting agents comprise e.g., the degreasing products provided by Ge-ka supplies (http://www.ge-ka-supplies.com/).

After the extrusion of the the PVC panel, its cooling and preferably also short-degreasing on at least one of its surfaces, the in-line coating of said PVC panel can be performed by any technique known in the art and suitably compatible with the design and speed of the PVC panel production line in accordance with the method of the present invention. In a preferred embodiment, the waterborne emulsion paint is applied by in-line spraying, blasting, roll-coat, brush-coat, or inkjet application, and is preferably spray-coated. Spray-coating or blasting according to the method of the invention can be performed according to any known technique in the art. Preferably, it is performed at room temperature using spray guns.

In a further aspect, the present invention provides a use of a PVC panel production line comprising at least the following elements:
- PVC extruder for extruding a PVC panel;
- coating unit for coating said PVC panel with a water-borne emulsion paint;
- drying unit for drying said water-borne emulsion paint;
for the manufacture of a waterborne emulsion paint coated PVC panel, wherein said coated PVC panel comprises a PVC panel and a cured paint coating covering at least one main surface of said PVC panel without any intermediate primer layer.

An example of a preferred embodiment of PVC panel production line suitable for the above use and for performing a method according to the invention is schematically illustrated in Figure 1. In this example, the production line begins with the PVC panel (1) extrusion system or, simply, the extruder (2), as schematically illustrated by block having a conical hopper. The extrusion process commences when small nurdles (particles) of PVC, possibly admixed with any desired additives such as plasticizers etc., are fed to the heated barrel of the extruder, where they become gradually molten into a uniform and hot PVC mass. The molten PVC mass is then continuously pushed towards the exit of the extruder barrel, i.e. towards the breaker plate and the die comprising the opening that confers the shape onto the hot and still uncoated PVC panel (1a) that is pushed through and exits from the die opening. Said panel will usually be first conveyed to the cooling unit (3), which can be e.g. a water bath or a calibrator, e.g. a vacuum calibrator. In preferred embodiments of the production line of the invention, the cooling unit will be a calibrator; however other systems known in the art can also be used. As described above, in an advantageous embodiment, the uncoated panel (1a) can also be conveyed through a degreasing unit (4), such as e.g. a soft roller or a brush comprising a degreasing agent.

At this stage, the degreased uncoated panel (1a) is conveyed into a coating unit (5), such as a paining station or a spray-coating chamber, as schematically illustrated in Figure 1. In a preferred embodiment, the paint is applied by a pressurised paint gun. Possibly, the paint gun is of the type in which the amount of paint and/or the paint spraying pressure can be varied, which would allow to produce a number of different visual and textural effects. Alternatively, a paint gun may be used in which the amount of paint sprayed on the extruded PVC panel and the pressure is fixed to produce a predetermined visual effect. In a standard example of a pressure gun, the paint can be released under the pressure of +/- 2 - 4 bar and sprayed onto the degreased panel surface at ambient temperature (about 22 °C). For a non-texture aqueous emulsion paint, between 50 - 200 g/m², preferably 70-120 g/m² paint is used per PVC panel surface, which results in a dried coating having final thickness comprised between 20-80 micron, preferably between 30-50 micron.

Following the in-line coating in the coating unit (5), the coated PVC panel (1b) is then conveyed into a drying unit (6), schematically illustrated in Figure 1 as two IR-ovens. Of course, as it will be immediately appreciated by any skilled person, the type and the amount of drying units can vary depending on the desired operation time and the amount of heat a PVC panel can sustain. For the reasons as laid down above, in a particularly preferred embodiment, the coat drying unit comprises an IR-heating system, preferably a gas-catalytic IR-heating system, such as a quartz IR heating lamp. In preferred embodiments of the above embodiment, the amount of IR-heating units can be comprised between 1 and 10, preferably 2 to 6 units, most preferably will be 4 or 5 units. For example, for an aqueous-paint-coated PVC panel (1b) having dimensions of about 30 cm by 2.5m, conveyed through a series of four IR-ovens, each set to a temperature between 40-60°C, the drying time could be around 1 hr 30 minutes.

Following the in-line drying in at least drying unit (6), the PVC panel coated with a cured (dried) paint (1c) can now be cut into shorter coated panels (1d) as final products, which can be stacked (1d), packed, and shipped to their final distributor.

In the last aspect, the present invention also provides the thus obtained final product of the above-described method, i.e. the coated PVC panel for use in indoor as well as outdoor conditions, said coated PVC panel comprising a PVC panel and a cured paint coating, said PVC panel characterized in that said cured paint coating was applied as a water-borne emulsion paint directly on the PVC panel without any intermediate primer layer.

## Claims

1. A method for manufacturing a coated polyvinyl chloride (PVC) panel, said method comprising the steps of:
a) extruding a PVC panel on a PVC panel production line;
b) subsequently, in-line coating of at least one main surface of said PVC panel without any intermediate primer layer with a waterborne emulsion paint;
c) in-line drying of said in-line coated PVC panel to obtain a PVC panel coated on at least one main surface with a cured paint coating.

2. Method according to claim 1 wherein said water-borne emulsion paint has density equal to at least 1.25 g/cm3, preferably at least 1.35 g/cm3, most preferably at least 1.45 g/cm3.

3. Method according to claim 1 or 2, wherein the water-borne emulsion comprises acrylic binder.

4. Method according to claim 3, wherein said acrylic binder comprises a polymer of alkyl ester of acrylic or methacrylic acid, or a styrene-copolymer of alkyl ester of acrylic or methacrylic acid.

5. Method according to claim 4, wherein alkyl group of said alkyl ester comprises between 1 to 15 carbon atoms, preferably comprises between 2 to 7 carbon atoms.

6. Method according to any of the preceding claims, wherein the waterborne emulsion paint further comprises at least one cellulose derivative.

7. Method according to claim 6, wherein the cellulose derivative is selected from the group comprising hydroxyalkylcellulose, preferably hydroxyethyl cellulose (HEK); alkylcellulose, preferably methylcellulose or ethylcellulose; carboxymethylcellulose; cellulose acetate, cellulose acetate propionate, cellulose acetate butyrate, benzylcellulose, or any mixture thereof.

8. Method according to any of the preceding claims, wherein the in-line drying in step c) is performed by air-drying, convection oven, or IR-heating.

9. Method according to claim 8, wherein the in-line drying in step c) is performed by IR-heating at temperatures comprised between 30 and 70 °C, preferably between 38 to 68 °C.

10. Method according to any of the preceding claims, said method further comprising an additional step between the steps a) and b), said step involving degreasing of the at least one main surface of said PVC panel that is subjected to the in-line coating in step b).

11. Method according to any of the preceding claims, wherein the waterborne emulsion paint is applied by in-line spray, blasting, roll-coat, brush-coat, or inkjet application.

12. Method according to any of the preceding claims, wherein the waterborne emulsion paint further comprises mineral particles suitable for creating a texture coat.

13. Use of a PVC panel production line comprising the following elements:
- PVC extruder for extruding a PVC panel;
- coating unit for coating said PVC panel with a water-borne emulsion paint;
- drying unit for drying said water-borne emulsion paint;
for the manufacture of a coated PVC panel, wherein said coated PVC panel comprises a PVC panel and a cured paint coating covering at least one main surface of said PVC panel without any intermediate primer layer

14. Use according to claim 13, wherein the coat drying unit comprises an IR-heating system, preferably a gas-catalytic IR-heating system.

15. A coated PVC panel for use in indoor as well as outdoor conditions, said coated PVC panel comprising a PVC panel and a cured paint coating, said PVC panel **characterized in that** said cured paint coating was applied as a water-borne emulsion paint directly on the PVC panel without any intermediate primer layer.
